# EUROPEAN PATENT SPECIFICATION

(11) **EP 0 542 150 B1**
(45) Date of publication and mention of the grant of the patent: **08.04.1998**
(21) Application number: 92119047.6
(22) Date of filing: 06.11.1992
(51) Int. Cl.: B23B 27/14

(54) **High productivity insert**
Hochleistungsschneideinsatz
Plaquette de coupe à haute productivité

(30) Priority: 12.11.1991 US 790966
(43) Date of publication of application: 19.05.1993
(73) Proprietor: VALENITE INC., Troy Michigan 48007-3950 (US)
(72) Inventor: Katbi, Karl, Troy, MI 48083 (US); Bernadic, Thomas J., Madison Heights, MI 48071 (US); Lowe, Tony M., Royal Oak, MI 48073 (US); Brockett, Brendon L., Dearborn Heights, MI 48127 (US)
(74) Representative: Grünecker, Kinkeldey, Stockmair & Schwanhäusser Anwaltssozietät

(56) References cited:
- EP-A- 0 314 647
- US-A- 4 056 872

## Description

The present invention relates to a polygonal indexable cutting insert, comprising an upper surface, a lower surface adapted to be seated in a tool holder pocket, and a side wall extending substantially unbroken between the upper surface and lower surface to form a body, and cutting edges defined by the intersection of the upper surface and a side wall and descending bi-directionally from the corners of the insert toward the mid-point of each side wall, and a centrally located aperture extending at least partially through the insert to accommodate a fastener means and a land formed along and rearward from said cutting edges.

Such a polgonal indexable cutting insert is known from US patent No. 40 56 872. In this design, the body has a raised portion, which essentially repeats the shape of the cutting edges. The raised portion consists of guiding surfaces to direct and break the chips after removal from the machined material. The guiding surfaces are starting out at the land portion and are extending inclined towards a center portion of the insert and merge with the upper surface. Ridges, that are extending upwardly towards the upper surface are formed in the corners between the guiding surfaces. Such a design provides a certain stiffness due to its massive layout. However, the direction of inclination of the surfaces are causing a high friction between the chips to be directed and the guiding surfaces. In addition, the chips tend to curl and long snarl chips might be generated, causing danger to the machining process, equipment and the operator.

Therefore, it is the object of the invention to lower the friction between the insert and the chips while having effective chip breaking characteristics at the same time. In addition, impact strength of the cutting edges should be improved.

The objects are achieved by the invention in a cutting insert of the afore mentioned kind by a chip breaker surface adjacent the land and descending bi-directionally, i.e. rearwarly of the land toward the aperture and correspondingly with descent of the edge toward the sidewall midpoint such that in a cross-section through a centerline of the aperture, any point on the chip breaker surface is lower than the cutting edge.

The insert according to the invention allows an increase in friction between the chips and the insert caused by the shape of the body and the inclination of the chip breaker surface. Chips are not forced to move upwardly along any guiding surfaces. At the same time, the chip breaker surfaces are sufficient to guide and to break the chips. Due to the compact design of the body and the arrangement of the chip breaker surfaces, the impact strength of the cutting edges is improved.

In the embodiment of the invention, said aperture may extend through the insert and may be surrounded by a raised angle or island to protect the fastener from chip flow damage during cutting operations.

Further, it may be advantageous, if said bi-directional descend angle at the corner will be about 8° towards the center of the body, and 4° along the side of the insert.

The insert may also have a center which is about 0.51 - 0.81mm (.02 to .032 inches) lower than the corners.

The cutting results will be obtained by operating at 0.36 - 1.27mm PR (.014 to .050 IPR), 2.54 - 15.24mm (.1 to .6 inches) of depth of cut and 91.44 - 365.76m/min (300 to 1200 feet per minute).

### BRIEF DESCRIPTION OF THE DRAWINGS

Figure 1 is a top perspective of the insert of the present application.

Figure 2 is a side view of the insert showing the tapered configuration of the cutting edge.

Figure 3 is sectional view of the insert along line 3-3 showing the cutting action of the insert.

Figure 4 is a sectional view of the insert along line 4-4

Figure 5 is a detailed view of the nose portion of the insert showing the resultant ridge.

Figure 6 is a sectional view of the insert along line 6-6.

### DETAILED DESCRIPTION OF THE PREFERRED EMBODIMENTS

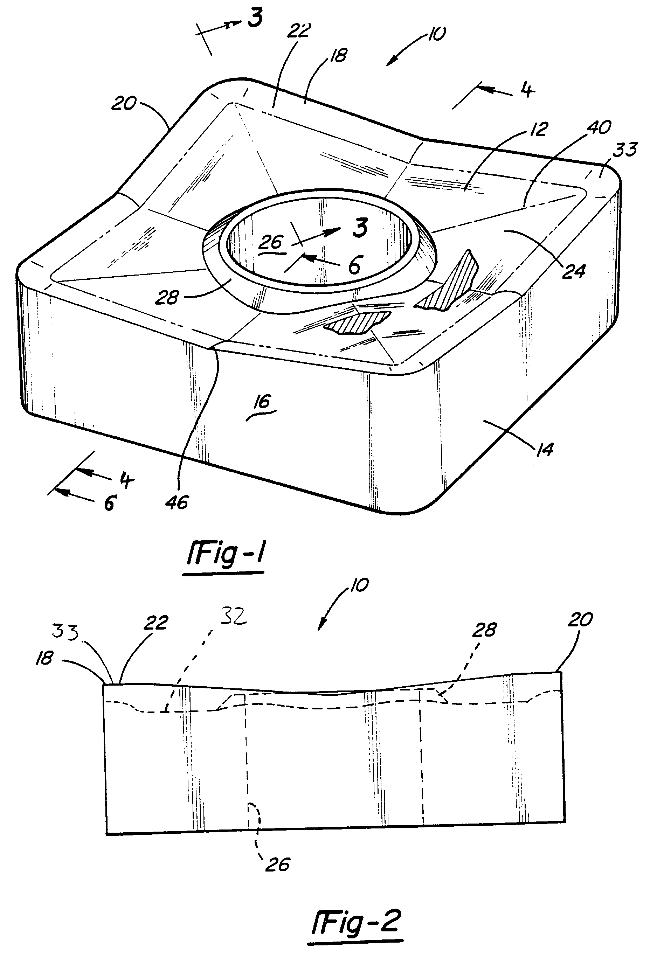

Referring now to the drawings, where like numerals depict like structures, and particularly to Figure 1, there is shown therein a perspective view of the insert 10. The insert shown is polygonal in shape. The insert has an upper surface 12, which forms the rake face, a lower surface (not shown) and a side wall 14 extending substantially unbroken therebetween to define a body 16. The insert as shown is adapted to be seated in a tool holder pocket at its lower surface, and is indexable within such a tool holder.

Upper surface 12 has a tapered cutting edge 18 along it periphery 20, and is further equipped with a land 22, which extends substantially around the periphery of the upper surface and rearwardly of the cutting edge. Rearward of the land is a chip strain surface 24, which extends around the upper surface of the insert adjacent to the land. The upper surface of the insert is provided with at least one bi-directional chip breaker surface formed therein having a tapered configuration corresponding to the configuration of the cutting edge and descending bi-directionally from the land toward the center of the insert and the depth of cut line 4-4.

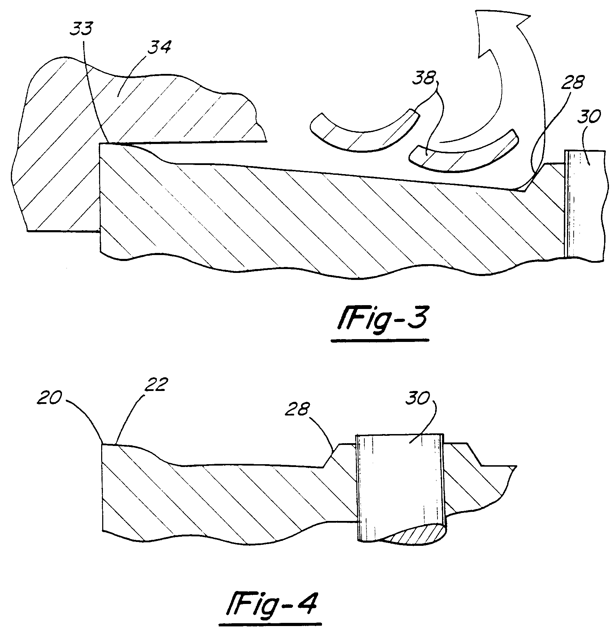

The insert is provided with a central aperture 26 extending at least partially through the body of the insert. The aperture is surrounded with a centrally raised angular chip reflecting island 28 to aid in chip breaking, and further to protect a fastening means 30 (as seen in Figure 3) from chip flow damage.

The cutting edge is further provided with a ridge along the centerline of the nose area of the insert to improve impact strength of the cutting edge. The ridges are formed by the joining of two different angular surfaces formed in the cutting edge. In the polygonal insert shown in the figures, the ridge is formed by the intersection of a 4 degree angular surface and an 8 degree angular surface at the nose portion 33 of the insert. It will be understood by those skilled in the art that when the insert has a polygonal shape, each corner thereof is a nose portion. It has been found that this combination exhibits greatest improvement in force distribution across the rake face when the center 46 of the insert is in the range of about 0,51 mm (.02) to 0,81 mm (.032), and preferably 0,71 mm (.028 inches) lower than the highest point of the insert, normally located at the nose area of the insert.

It is contemplated that the tapered cutting edge and upper surface described reduce localized stress concentrations in the insert along the rake face at the depth of cut line during cutting.

Turning now to Figure 2, a side elevation of the insert is shown depicting the tapered configuration of the cutting edge and the manner in which the upper surface rake face configuration 32, shown in phantom, corresponds to the configuration of the cutting edge. The correspondence between the upper surface and the cutting edge provides greater impact strength to the cutting edge.

Figure 3 is a detailed sectional view of the insert of Figure 1 taken along line 3-3. The insert is shown while cutting a workpiece 34, at its nose portion 33. The chips 38 which are generated as the insert moves through the workpiece are subjected to strain as they move along the upper surface of the insert, until they finally break. As the chips move along the upper surface of the insert, they encounter the raised angular island which is protecting the fastening means 30, shown as an "H" pin. It was a long felt problem in the art that as chips moved along the surface of an insert during the cutting operation, they would encounter the fastening means and move across it, thereby eventually damaging the fastening means and contributing to the costs incurred in cutting operation. The present invention solves this problem by providing for the raised angular island which direct the chips away from the fastening means and thereby contributes to improved tool holder life and reduced cost of operation.

Figure 4 is a sectional view of the insert of Figure 1 taken along line 4-4, showing the relatively uniform cross sectional profile of the insert along much of its body.

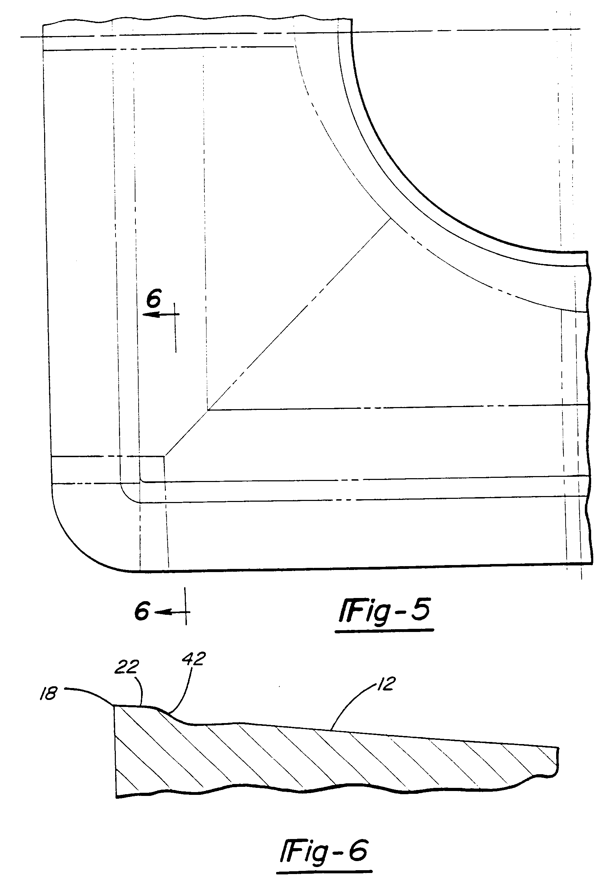

Figure 5 is a detailed top sectional view of the nose portion of polygonal insert shown in Figure 1. At the corner of the insert there is formed the resultant ridge and the land and chip breaker surfaces previously described in connection with Figure 1.

Referring to Figure 6, there is shown therein a side sectional view of the nose portion of Figure 5 taken along line 6-6. As seen therein, the cutting edge and land merge with the chip breaker surface. It can be seen that extra strain is induced on the chips by the resultant ridge 40 which merges into the tapered surface 42 at the nose portion. Such configuration serves to induce extra strain in the chips, and further to impart improved impact resistant properties to the insert.

The insert according to the present invention is capable of high depth, moderate to high metal removal rate from workpiece, like steel, at high to medium cutting speeds and depth of cut. Moreover, it has been observed that the insert of the present invention reduces chatter on long shafts or thin walled parts while efficiently machining those parts at high metal removal rates. The insert transfers a substantial amount of the heat generated during the cutting operation into the chips which results in longer insert life.

Another advantage of the present invention is reduced contact between the chip and the insert while inducing maximum deformation forces into the chips generated at the shear zone for efficient chip breaking. It should now be clear that, because of the tapered configuration of the insert, the chip is induced to curl and break at a wide range of feed rates and depths of cut on a variety of workpiece materials, as well as to strengthen the cutting edge under variable loads and heat fluctuations produced by variations in the depth of cut.

The insert of the present invention is useful at 0,36-1,27 mm PR (.014-.050 IPR) at 2,54 mm to 15,24 mm (.10 to .60 inches) of depth of cut, at cutting speeds of about 91,44-365,76 m/minute (300-1,200 ft/minute.). It is contemplated that the insert is particularly useful on long shaft parts where chatter reduction is critical, pipes and thin walled parts, and where high metal removal rates/high productivity through forged or cast steels in turning and facing operations are desired. The insert of the present invention allows full utilization of machining horsepower and improved rigidity on older machines and reduction of energy requirements and associated costs for heavy cuts.

## Claims

1. A polygonal indexable cutting insert, comprising:
an upper surface (12), a lower surface adapted to be seated in a tool holder pocket, and a side wall (14) extending substantially unbroken between the upper surface and lower surface to form a body, and cutting edges (18) defined by the intersection of the upper surface (12) and the side wall (14) and descending bi-directionally from the corners of the insert towards the midpoint of each side wall, and a centrally located aperture (26) extending at least partially through the insert (10) to accommodate a fastener means (30) and a land formed along and rearward from said cutting edges (18), **characterised by** a chip breaker surface (24) adjacent the land and descending bi-directionally, i.e. rearwardly of the land toward the aperture and correspondingly with descent of the edge toward the sidewall midpoint such that in a cross-section through a centerline of the aperture, any point on the chip breaker surface is lower than the cutting edge.

2. The insert of claim 1, wherein said aperture (26) extends through the insert (10) and is surrounded by a raised angular island (28) to protect the fastener (30) from chip flow damage during cutting operations.

3. The insert of claim 1, wherein said insert has a center line (46), which is about 0.51mm - 0.81mm (.02 to .032 inches) lower than the corners.

4. The insert of claim 1, wherein said insert is operable at 0.36 - 1.27mm PR (.014 to .050 IPR), 2.54 - 15.24mm (.1 to .6 inches) of depth of cut and 91.44 - 365.76 m/min (300 to 1200 feet per minute).

## Patentansprüche

1. Polygonale Wendeschneidplatte mit:
einer oberen Oberfläche (12), einer unteren Oberfläche, die daran angepaßt ist, in eine Werkzeughalteraufnahme eingesetzt zu werden, und einer Seitenwand (14), die sich im wesentlichen ununterbrochen zwischen der oberen Oberfläche und der unteren Oberfläche erstreckt, um einen Körner zu bilden, und Schneidkanten (18), die durch das Zusammentreffen der oberen Oberfläche (12) und der Seitenwand (14) gebildet werden, und sich in zwei Richtungen von den Ecken der Schneidplatte aus in Richtung zum Mittelpunkt jeder Seitenwand hin abfallend erstrecken, und einer mittig angeordneten Öffnung (26), die sich zumindest teilweise durch die Schneidplatte (10) hindurch erstreckt, um ein Befestigungsmittel (30) aufzunehmen, und einem Schneidrücken, der entlang der und rückwärtig von den Schneidkanten (18) aus sich erstreckend ausgebildet ist, **gekennzeichnet durch** eine Spanbrecheroberfläche (24), die benachbart zum Schneidrücken angeordnet ist und sich in zwei Richtungen abfallend erstreckt, d.h. rückwärtig von dem Schneidrücken in Richtung zur Öffnung und entsprechend abnehmend von der Kante aus in Richtung zum Seitenwandmittelpunkt, so daß in einem Querschnitt durch eine Mittellinie der Öffnung, jeder Punkt auf der Spanbrecheroberfläche unterhalb der Schneidkante liegt.

2. Schneidplatte nach Anspruch 1, bei der die Öffnung (26) sich durch die Schneidplatte (10) hindurch erstreckt und durch eine emporgehobene angewinkelte Insel (28) umgeben ist, um die Befestigungseinrichtung (30) vor Beschädigung durch Spanfluß während der Schneidvorgänge zu schützen.

3. Schneidplatte nach Anspruch 1, bei der die Schneidplatte eine Mittellinie (46) aufweist, die ungefähr 0,51 mm - 0,81 mm (0,02 bis 0,032 Inches) niedriger als die Ecken ist.

4. Schneidplatte nach Anspruch 1, bei der die Schneidplatte betreibbar ist bei 0,36 - 1,27 mm PR (0,014 - 0,050 IPR), 2,54 - 15,24 mm (0,1 bis 0,6 Inches) Schnittiefe und 91,44 - 365,76 m/min (300 - 1200 ft/min).

## Revendications

1. Insert de coupe indexable et polygonal, comprenant :
une paroi supérieure (12) ;
une paroi inférieure adaptée pour être logée dans une douille d'un porte-outil ; et
une paroi latérale (14) s'étendant de façon substantiellement continue entre la paroi supérieure et la paroi inférieure pour former un corps ; et
des bords de coupe (18) définis par l'intersection de la paroi supérieure (12) et de la paroi latérale (14), et descendant de façon bi-directionnelle à partir des angles de l'insert vers le point médian de chaque paroi latérale, et
une ouverture pratiquée centralement (26) traversant au moins partiellement l'insert (10) pour recevoir un moyen de fixation (30) et un îlot formé le long et derrière les dits bords de coupe (18), **caractérisé par** une paroi de cassage des copeaux (24) adjacente à l'îlot et descendant de façon bi-directionnelle, c'est à dire vers l'arrière de l'îlot vers l'ouverture et de façon correspondante à la pente du bord vers le point médian de la paroi latérale, de telle manière que, dans une coupe transversale à travers une ligne centrale de l'ouverture, tout point sur la paroi de cassage des copeaux soit plus bas que le bord de coupe.

2. Insert selon la revendication 1, dans lequel la dite ouverture (26) traverse l'insert (10) et est entouré par un îlot surélevé rectangulaire (28) pour protéger le moyen de fixation (30) de tout dommage du flux de copeaux pendant les opérations de coupe.

3. Insert selon la revendication 1, dans lequel le dit insert présente une ligne centrale (46), qui est entre 0,51 et 0,81 mm environ (entre 0,02 et 0,032 pouce environ) plus basse que les angles.

4. Insert selon la revendication 1, dans lequel le dit insert peut fonctionner à entre 0,36 et 1,27 mm par tour (entre 0,14 et 0,050 pouce par tour), entre 2,54 et 15,24 mm de profondeur de coupe (entre 0,1 et 0,6 pouce), et entre 91,44 et 365,76 m/mn (entre 300 et 1200 pieds par minute).
